# EUROPEAN PATENT SPECIFICATION

(11) **EP 2 147 321 B1**
(45) Date of publication and mention of the grant of the patent: **02.05.2012**
(21) Application number: 07805755.1
(22) Date of filing: 01.08.2007
(51) Int. Cl.: G01P 21/00, G01P 15/18

(54) **WIDE-BAND ACCELEROMETER SELF-RECOGNISING ITS CALIBRATION**
SEINE KALIBRATION SELBSTERKENNENDER BREITBAND-BESCHLEUNIGUNGSMESSER
ACCÉLÉROMÈTRE À LARGE BANDE RECONNAISSANT AUTOMATIQUEMENT SON ÉTALONNAGE

(30) Priority: 15.05.2007 IT TO20070335
(43) Date of publication of application: 27.01.2010
(73) Proprietor: Sequoia IT S.R.L., 10024 Moncalieri (IT)
(72) Inventor: TITOLO, Massimiliano, I-10024 Moncalieri (IT)
(74) Representative: Garavelli, Paolo
(86) International application number: PCT/IT2007/000555
(87) International publication number: WO 2008/139503

(56) References cited:
- GB-A- 2 146 775
- US-A- 3 057 208
- US-A1- 2004 007 064
- BLOW B A ET AL: "A dual frequency range integrated circuit accelerometer using capacitive and piezoelectric sensing techniques" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, vol. VOL. 2, 3 May 1993 (1993-05-03), pages 1120-1123, XP010115278 ISBN: 0-7803-1281-3

## Description

The present invention refers to a wide-band accelerometer self-recognising its calibration.

Numerous solutions are known in the art dealing with single-axis or multiple-axis accelerometers or acceleration measuring sensors, self-calibrated or able to be calibrated with automatic procedures, such as those disclosed, for example, in prior patents n. KR940008199, JP2006091013, WO02059627 US5060504, US3120622, US2007073502, KR20060056230, US2006059976, GB1246212, W003065054, US2003061859, US6640609, US6823279, EP1227328, US6035694, JP11248743, US5621157, US5445006, CN87105637, US4158956, US3470730, US3464255, US3241355, US3350916.

These known sensors, however, allow reading only limited frequency bands.

Moreover, known sensors either cannot be calibrated or, if such possibility is provided, it is the result of the adoption of extremely complex and costly technical arrangements.

GB-A-2 146 775 and BLOW B. A. ET AL.: "A dual frequency range integrated circuit accelerometer using capacitive and piezoelectric sensing techniques" PROCEEDINGS OF THE INTERNATIONAL SYMPOSIUM ON CIRCUITS AND SYSTEMS (ISCS). CHICAGO, MAY 3 - 6, 1993, NEW YORK, IEEE, US, vol. 2, 3 May 1993 (1993-05-03), pages 1120-1123, XP010115278 ISBN: 0-7803-1281-3 disclose a wide-band accelerometer according to the preamble of Claim 1.

Therefore, object of the present invention is solving the above prior art problems by providing a single-axis or multiple-axis accelerometer or acceleration-measuring sensor, that is able to detect a wide frequency spectrum.

Moreover, an object of the present invention is providing a single-axis or multiple-axis accelerometer or acceleration-measuring sensor, self-recognising its calibration, that is thereby able to autonomously, simply, quickly and economically verify it correct calibration.

The above and other objects and advantages of the invention, as will result from the following description, are obtained with a wide-band accelerometer self-recognising its calibration as described in claim 1. Preferred embodiments and non-trivial variations of the present invention are the subject matter of the dependent claims.

- It will be immediately obvious that numerous variations and modifications (for example related to shape, sizes, arrangements and parts with equivalent functionality) can be made to the described device without departing from the scope of the invention as appear from the enclosed claims.

The present invention will be better described by some preferred embodiments thereof, provided as a nonlimiting example, with reference to the enclosed drawings, in which:
- FIG. 1 shows a schematic diagram representing a preferred embodiment of the accelerometer according to the present invention; and
- FIG. 2a and 2b show two graphs representing a preferred detection mode of the accelerometer according to the present invention.

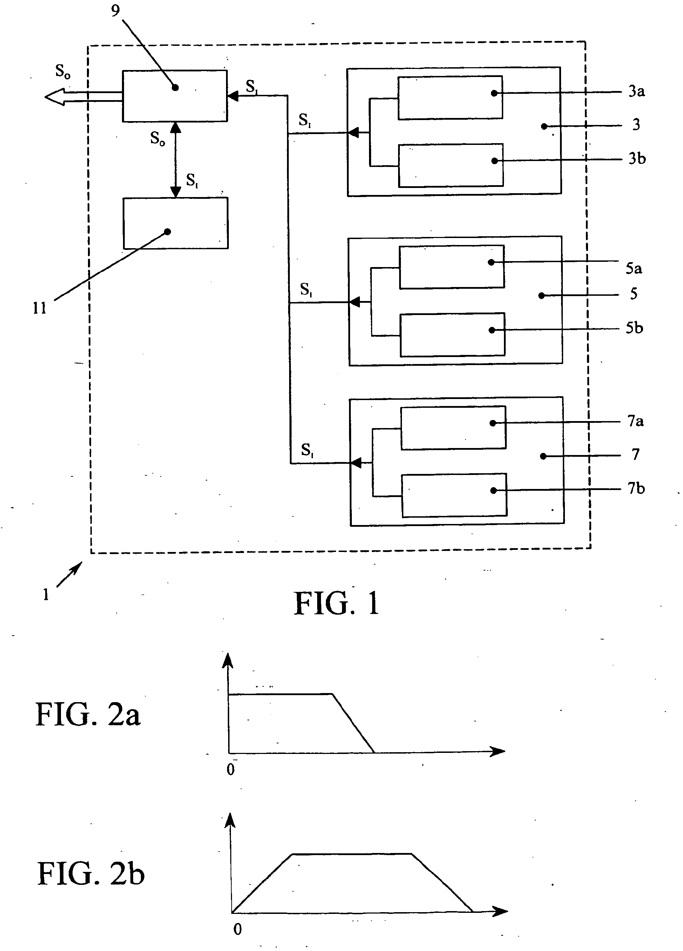

With particular reference to FIG. 1, it is possible to note that the wide band, single-axis or multiple-axis accelerometer or the acceleration-measuring sensor 1, self-recognising its calibration, comprises at least one accelerometric detecting unit, oriented according to at least one of the directions of the measuring axes of the accelerometer 1 itself, such unit being composed of at least two accelerometric transducers adapted to read, in a parallel way, different frequency bands. In particular, with reference to FIG. 2a and 2b, it is possible to note that the reading mode of the two transducers included in each accelerometric detecting unit provides that at least the first one of the two (FIG. 2a) has a band that starts from the frequency with value zero or that is able, autonomously, to check its actual operation and guarantee the validity and its reading calibration performed in time, and that at least the second transducer (FIG. 2b) reads a frequency band that is partially overlapping the band read by the first transducer.

Obviously, in case of an accelerometer 1 of the single-axis type, a single accelerometric detecting unit, oriented along the measuring direction, will be enough. Instead, if the accelerometer 1 is of the multiple-axis type (such as for example the three-axes system shown in FIG. 1), three accelerometric detecting units, respectively 3, 5, 7, will be used, each one of which is oriented along one of the three measuring directions, such directions being preferably in agreement with a system of Cartesian axes X, Y and Z defined by the measuring system. Obviously, each accelerometric detecting unit 3, 5, 7 in turn will comprise a pair of transducers, respectively 3a and 3b, 5a and 5b, 7a and 7b, operating according to what has been described.

The accelerometer 1 according to the present invention further comprises at least one electronic circuit 9 for conditioning and digitising signals S_{I} coming from the accelerometric detecting units 3 and/or 5 and/or 7, and in particular from the respective pairs of transducers 3a and 3b and/or 5a and 5b and/or 7a and 7b, and for managing the output signals Sₒ. The accelerometer 1 according to the present invention further comprises at least one microprocessor 11 adapted, in particular, to read the digitised signals coming from each accelerometric detecting unit 3 and/or 5 and/or 7 through the conditioning and digitising electronic circuit 9 and to recombine them for every measuring axis in at least one global output signal Sₒ, transmitted in an analogue or digital way always through the conditioning and digitising electronic circuit 9, such output signal Sₒ being a wide-band signal that has as lower frequency the value zero (or, more generally, the lowest value of the band read by the first transducer) and as maximum value the maximum value of the accelerometer able to measure the frequency band with the highest value. The combination of the above elements, therefore, will allow, through the microprocessor 11, to combine the different acceleration readings and to rebuild a global signal of the acceleration measure with wide frequency spectrum that is able to be transferred outside in a digital or analogue way. The first transducer, moreover, will allow the microprocessor to verify its actual operation and calibration due to the technology of the transducer itself or indirectly by comparing the gravity acceleration with the reading of the value at zero frequency. Starting from this certified data, therefore, the microprocessor will be able, by exploiting the overlapping of the different frequency ranges, to validate the whole chain of transducers also with those transducers that are not technologically able to do this autonomously, thereby obtaining in real time a reading with wide frequency spectrum that is constantly verified. In particular, the accelerometer 1 according to the present invention will then be able to guarantee the perfect calibration of the whole chain of transducers, either starting from the guarantee provided by the first transducer or reading the acceleration value at a frequency with value zero and comparing it with the gravity acceleration along the measuring direction of the transducer or with the value, possibly computed by the same microprocessor 11, of the gravity acceleration vector module if the accelerometer 1 according to the present invention has no measuring direction aligned with the gravity acceleration direction. Once having validated the first transducer, the values read in the overlapping area between the first transducer and the immediately following transducer will be compared, thereby validating also the correct calibration of the second transducer. This procedure will then be repeated every time in case of systems with more than two transducers per accelerometric detecting unit.

Moreover, having suitably programmed the microprocessor 11, it is possible to allow the accelerometer 1 according to the present invention, if one of the transducers of the chain is not suitable calibrated, to:
- automatically self-calibrate itself, where the technology of the employed transducers so allows;
- communicate as output, through a suitable digital output (for example, of the electric, luminous, sound type) its actual incorrect calibration.

## Claims

1. Wide-band, single-axis or multiple-axis accelerometer or acceleration-measuring sensor (1), self-recognising its calibration, comprising at least one accelerometric detecting unit, said unit being composed of at least a first and a second accelerometric transducers adapted to read, in a parallel way, different frequency bands, at least one electronic circuit (9) for conditioning and digitising signals (S_{I}) coming from said accelerometric detecting unit and at least one microprocessor (11) adapted to read said signals (S_{I}) through said conditioning and digitising circuit (9) and to recombine them for every measuring axis into at least one global output signal (Sₒ), where
- at least a first one of said two transducers reads a frequency band that starts from a frequency with value zero and at least a second one of said two transducers reads a frequency band that is partially overlapped with the band read by said first transducer; **characterised in that**
- said first transducer is autonomously able to check its actual operation and calibration by cooperating with said microprocessor (11), starting from this check the microprocessor (11) being then able, by exploiting the overlapping of the different frequency ranges, to check and validate said second transducer and the possible whole chain of following transducers.

2. Accelerometer (1) according to claim 1, **characterised in that** said accelerometric detecting unit is oriented according to at least one of the directions of the measuring axes.

3. Accelerometer (1) according to claim 1, **characterised in that** it comprises three accelerometric detecting units (3, 5, 7), each one of which is oriented according to one of the three measuring directions, such directions being preferably in agreement with a system of Cartesian axes X, Y and Z, each one of said accelerometric detecting units (3, 5, 7) being respectively equipped with said two transducers (3a, 3b; 5a, 5b; 7a, 7b).

4. Accelerometer (1) according to claim 1, **characterised in that** said output signal (Sₒ) is a wide-band signal whose frequency is equal to a lowest value of said band read by said first transducer and has as maximum value a maximum value of said transducer able to measure a frequency band with highest value.

5. Accelerometer (1) according to claim 1, **characterised in that** said first transducer cooperates with said microprocessor (11) to verify its actual operation and calibration by comparing a gravity acceleration with said frequency reading with value zero.

6. Accelerometer (1) according to claim 1, **characterised in that** said first transducer is adapted to cooperate with said microprocessor (11) to verify an actual operation and calibration thereof by comparing said reading with frequency with value zero with a value of a module of said gravity acceleration.

## Patentansprüche

1. Mono- oder multiaxialer Breitband-Beschleunigungsmesser oder Beschleunigungssensor (1) mit Selbsterkennung der Kalibrierung, der **dadurch gekennzeichnet** ist, mindestens eine Beschleunigungserfassungsgruppe einzuschließen, die genannte Gruppe besteht aus mindestens zwei Beschleunigungsgebern, die dazu dienen, parallel unterschiedliche Frequenzbereiche abzulesen, aus mindestens einem elektronischen Konditionierungs- und Digitalisierungskreis (9) der Signale (S_{I}), die aus der genannten Beschleunigungserfassungsgruppe kommen, und aus mindestens einem Mikroprozessor (11), der dazu dient, die genannten Signale (S_{I}) durch den genannten elektronischen Konditionierungs- und Digitalisierungskreis (9) abzulesen und diese wieder für jede Messachse in mindestens ein Gesamtausgangssignal (S_{O}) umzuwandeln, wo
- mindestens einer der beiden genannten Geber einen Bereich abliest, der von einem Nullfrequenzwert startet, und mindestens ein zweiter der beiden genannten Geber einen Frequenzbereich abliest, der teilweise den Bereich überdeckt, der vom genannten ersten Geber abgelesen wurde; und **dadurch gekennzeichnet ist, dass**
- der genannte erste Geber autonom seinen effektiven Betrieb und seine Kalibrierung kontrollieren kann und mit dem genannten Mikroprozessor (11) zusammenarbeitet, von dieser Kontrolle aus kann der Mikroprozessor (1) durch Ausnutzen der Überdeckung der verschiedenen Frequenzbereiche den genannten zweiten Geber sowie die eventuelle gesamte Kette der nachfolgenden Geber kontrollieren und bestätigen.

2. Beschleunigungsmesser (1) gemäß Patentanspruch 1, der **dadurch gekennzeichnet ist, dass** die genannte Beschleunigungserfassungsgruppe gemäß mindestens einer der Richtungen der Messachsen ausgerichtet ist.

3. Beschleunigungsmesser (1) gemäß Patentanspruch 1, der **dadurch gekennzeichnet** ist, drei Beschleunigungserfassungsgruppen (3, 5, 7) einzuschließen, die jeweils gemäß einer der drei Messrichtungen ausgerichtet sind, die entsprechenden Richtungen stimmen vorzugsweise mit einem kartesischen Achssystem X, Y und Z überein, jede der genannten Beschleunigungserfassungsgruppen (3, 5, 7) ist jeweils mit den genannten zwei Gebern (3a, 3b; 5a, 5b; 7a, 7b) ausgestattet.

4. Beschleunigungsmesser (1) gemäß Patentanspruch 1, der **dadurch gekennzeichnet ist, dass** das genannte Ausgangssignal (S_{O}) ein Breitbandsignal mit einer niedrigeren Frequenz ist, die einem niedrigeren Wert des genannten Bereiches entspricht, der vom genannten ersten Geber abgelesen wurde, und deren max. Wert ein max. Wert des genannten Gebers ist, der einen Bereich in einer Frequenz mit einem höheren Wert messen kann.

5. Beschleunigungsmesser (1) gemäß Patentanspruch 1, der **dadurch gekennzeichnet ist, dass** der genannte erste Geber mit dem genannten Mikroprozessor (11) zusammenarbeitet, um seinen effektiven Betrieb und die Kalibrierung durch den Vergleich einer Fallbeschleunigung mit der genannten Ablesung des Nullfrequenzwertes zu prüfen.

6. Beschleunigungsmesser (1) gemäß Patentanspruch 1, der **dadurch gekennzeichnet ist, dass** der genannte erste Geber dazu dient, mit dem genannten Mikroprozessor (11) zusammenzuarbeiten, um seinen effektiven Betrieb und die Kalibrierung durch den Vergleich der genannten Ablesung des Nullfrequenzwertes mit einem Wert eines Moduls der genannten Fallbeschleunigung zu prüfen.

## Revendications

1. Accéléromètre ou capteur d'accélération (1) mono ou multiaxial à bande large avec auto-reconnaissance du calibrage, **caractérisé par** le fait de comprendre au moins un groupe de détection accélérométrique, ledit groupe étant composé d'au moins deux transducteurs accélérométriques aptes à lire en mode parallèle des bandes de fréquence distinctes, au moins un circuit électronique de conditionnement et digitalisation (9) de signaux (S_{I}) provenant dudit groupe de détection accélérométrique et au moins un microprocesseur (11) apte à lire lesdits signaux (S_{I}) à travers ledit circuit électronique de conditionnement et digitalisation (9) et les recombiner pour chaque axe de mesurage en au moins un signal de sortie global (S_{O}), où
- au moins un premier desdits deux transducteurs lit une bande qui part d'une fréquence de valeur zéro et au moins un second desdits deux transducteurs lit une bande de fréquence qui est partiellement superposée à la bande lue par ledit premier transducteur; **caractérisé par le fait que**
- ledit premier transducteur est en mesure, en mode autonome, de contrôler son fonctionnement effectif et son calibrage en coopérant avec ledit microprocesseur (11), à partir de ce contrôle le microprocesseur (1) étant donc en mesure, en utilisant la superposition des diverses gammes de fréquence, de contrôler et valider ledit second transducteur et l'éventuelle chaine entière de transducteurs successifs.

2. Accéléromètre (1) selon la revendication 1, **caractérisé par le fait que** ledit groupe de détection accélérométrique est orienté selon au moins une des directions des axes de mesure.

3. Accéléromètre (1) selon la revendication 1, **caractérisé par** le fait de comprendre trois groupes de détection accélérométrique (3, 5, 7), chacun desquels est orienté selon une des trois directions de mesurage, ces directions étant de préférence concordes avec un système d'axes cartésiens X, Y et Z, chacun des dits groupes de détection accélérométrique (3, 5, 7) étant respectivement doté desdits deux transducteurs (3a, 3b; 5a, 5b; 7a, 7b).

4. Accéléromètre (1) selon la revendication 1, **caractérisé par le fait que** ledit signal de sortie (S_{O}) est un signal à large bande avec une fréquence inférieure égale à une valeur inferieure de ladite bande lue par ledit premier transducteur et a come valeur maximum une valeur maximum dudit transducteur apte à mesurer une bande en fréquence de valeur plus élevée.

5. Accéléromètre (1) selon la revendication 1, **caractérisé par le fait que** ledit premier transducteur coopère avec ledit microprocesseur (11) pour vérifier son effectif fonctionnement et calibrage par comparaison d'une accélération de gravité avec ladite lecture de la valeur à fréquence de valeur zéro.

6. Accéléromètre (1) selon la revendication 1, **caractérisé par le fait que** ledit premier transducteur est apte à coopérer avec ledit microprocesseur (11) pour vérifier son effectif fonctionnement et calibrage par comparaison de ladite lecture à fréquence de valeur zéro avec une valeur d'un module de ladite accélération de gravité.
